# EUROPÄISCHE PATENTSCHRIFT

(11) **EP 1 031 268 B1**
(45) Veröffentlichungstag und Bekanntmachung des Hinweises auf die Patenterteilung: **21.08.2002**
(21) Anmeldenummer: 00102836.4
(22) Anmeldetag: 11.02.2000
(51) Int. Cl.: A01C 17/00

(54) **Schleuderdüngerstreuer**
Centrifugal fertiliser spreader
Epandeur d'engrais centrifuge

(30) Priorität: 26.02.1999 DE 19908693; 28.04.1999 DE 19919237; 30.06.1999 DE 19930216
(43) Veröffentlichungstag der Anmeldung: 30.08.2000
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Lührmann,Johannes, 49134 Wallenhorst (DE)

(56) Entgegenhaltungen:
- EP-A- 0 213 370
- EP-A- 0 655 187
- EP-A- 0 880 877
- WO-A-98/34461
- US-A- 4 725 005

## Beschreibung

Die Erfindung betrifft einen Schleuderdüngerstreuer mit zwei rotierend angetriebenen Schleuderscheiben, auf denen jeweils zwei rinnenförmig ausgebildete Wurfschaufeln unterschiedlicher Länge angeordnet sind. Um große Arbeitsbreiten von 40 - 48 m und mehr zu erreichen, sind bisher vielfältige Versuche unternommen worden. Hierbei sind relativ lange Wurfschaufeln eingesetzt worden, um eine ausreichende Abwurfgeschwindigkeit für die Düngerkörner zu erreichen. Hierbei hat sich jedoch gezeigt, daß mit zwei rotierend angetriebenen Schleuderscheiben, auf denen zwei Wurfschaufeln jeweils angeordnet sind, sich eine ausreichend gleichmäßige Düngerverteilung über 40 - 48 m und mehr bei allen Düngersorten nicht ohne weiteres erreichen läßt.

Andere Vorschläge, wie beispielsweise gemäß der DE-OS 33 37 762 sehen vor, zur Erreichung von großen Arbeitsbreiten vier Schleuderscheiben, auf denen jeweils zwei Wurfschaufeln angeordnet sind, vorzusehen. Diese Anordnung ist jedoch relativ aufwendig und daher kostenintensiv.

WO-A-983 446 veröffentlicht einen Schleuderdüngerstreuer gemäß dem Oberbegriff des Anspruchs 1.

Der Erfindung liegt die Aufgabe zugrunde, mit einfachen Mitteln einen Schleuderdüngerstreuer zu schaffen, welcher in der Lage ist, auch über große Arbeitsbreiten von 40 - 48 m und mehr den Dünger gleichmäßig auszubringen.

Hierzu wird nach der Erfindung ein Schleuderdüngerstreuer mit den Merkmalen des Anspruches 1, vorgeschlagen. Mittels dieser Maßnahmen lassen sich in überraschend einfacher Weise die Düngerpartikel verschiedener Düngersorten über Arbeitsbreiten von 40 - 48 m und mehr in gleichmäßiger Weise verteilen. Durch die in der Rückwand jeder Wurfschaufel angeordnete schlitzförmige Durchtrittsöffnung kann ein Teil des Düngers austreten, bevor er das Ende der Wurfschaufel erreicht hat. Durch die schlitzförmige Durchtrittsöffnung wird also bereits Dünger mit einer kleineren Wurfweite abgeworfen. Es entsteht also pro Wurfschaufel quasi ein zweiter Streufächer im inneren Bereich neben dem im äußeren Bereich. Der von einer Wurfschaufel abgeworfene Düngerstrom wird somit in zwei Teilströmen abgeworfen. Dieses bringt in völlig überraschender Weise eine äußerst gleichmäßige Düngerverteilung bei verschiedenen Düngersorten. Diese erfindungsgemäße Maßnahme ergibt in überraschender Weise eine gleichmäßige Düngerverteilung mit einem sehr niedrigen Variationskoeffizienten.Von jeder Schleuderscheibe werden somit durch die besondere Ausgestaltung vier Streufächer, also durch die beiden Schleuderscheiben insgesamt acht sich überlappende Streufächer, die einen Gesamtstreufächer ergeben, erzeugt.

Als vorteilhaft hat sich herausgestellt, daß die Durchtrittsöffnung eine geringere Höhe als die Rückwand aufweist. Hierbei hat sich weiterhin als vorteilhaft herausgestellt, daß die Durchtrittsöffnung mittig zu der sich in radialer Richtung erstreckenden Mittellängsachse in der Rückwand der Wurfschaufel angeordnet ist. Hierbei ist die Durchtrittsöffnung etwa auf halber Länge der Wurfschaufel angeordnet, so daß der Beginn der Durchtrittsöffnung sich etwa in dem Bereich befindet, in welchem die Abfluggeschwindigkeit der Düngerkörner für die halbe Arbeitsbreite erreicht wird. Es wird also durch die Durchtrittsöffnung in der Rückwand der Wurfschaufel quasi eine zweite Wurfschaufel in die Wurfschaufel integriert. Diese neuartige Wurfschaufel erzeugt einen 2-fachen Streufächer, der in unterschiedlichen Bereichen liegt und die Arbeitsbreite abdeckt.

Vorteilhaft kann sein, um unterschiedliche Arbeitsbreiten große Arbeitsbreiten abdecken zu können, daß zunächst eine Wurfschaufel, vorzugsweise die kürzere Wurfschaufel teleskopartig und/oder längenverstellbar ausgebildet ist oder verschiedene Wurfschaufeln verschiedener Länge, vorzugsweise für die kürzere Wurfschaufel und gegeneinander austauschbar auf der jeweiligen Schleuderscheibe anordbar vorgesehen ist. Hierdurch kann man sich insbesondere an die unterschiedlichen Streueigenschaften verschiedener Materialien sowie an unterschiedlich geforderte Arbeitsbreiten in einfacher Weise anpassen.

Als vorteilhaft hat sich herausgestellt, daß die Längsmittellinie der schlitzförmigen Durchtrittsöffnung sich parallel zur Längsmittellinie der Wurfschaufel erstreckt. Hierdurch wird ein störungsfreier Abflug der nicht durch die Durchtrittsöffnung austretenden Düngerkörner erreicht.

In manchen Fällen kann es vorteilhaft sein, daß hinter der Wurfschaufel eine im Bereich der Durchtrittsöffnung beginnende weitere Wurfschaufel angeordnet ist, um die durch die Durchtrittsöffnung austretenden Düngerkörner zusätzlich gezielt zu beschleunigen.

Es ist auch möglich, die schlitzförmige Durchtrittsöffnung in der Rückwand von Wurfschaufeln bei Schleuderdüngerstreuern anzuordnen, bei denen vorgesehen ist, daß die Wurfschaufeln und die Auslauföffnungen, über welche das zu verteilende Material den Schleuderscheiben in einstellbaren Mengen zugeführt wird, derart zueinander angeordnet sind, daß die von den beiden Schleuderscheiben ausgehenden Wurfbahnen des Streumaterials im mittleren Streubereich des Schleuderdüngerstreuers gegeneinander gerichtet sind und einander überlappende, etwa segmentförmige Streubilder spiegelsymmetrisch zur Längsachse des Streuers entstehen. Auch bei dieser Art von Streuantrieb und Streuverfahren werden quasi von jeder Wurfschaufel zwei Streufächer erzielt, die insgesamt das segmentförmige Streubild ergeben. Weiterhin kann vorgesehen sein, daß eine Drehrichtungsänderungsvorrichtung zur Einstellung der Drehrichtung der Schleuderscheiben vorgesehen ist, so daß wahlweise die Schleuderscheiben derart angetrieben werden, daß sie, bezogen auf die Fahrtrichtung, im hinteren Bereich aufeinander zudrehen oder im hinteren Bereich auseinanderdrehen.

Ein besonders gleichmäßiges Streubild wird dadurch erreicht, daß die Drehzahl der Schleuderscheiben 700 bis 750 U/min, vorzugsweise 720 U/min beträgt, daß der Beginn der Durchtrittsöffnung der kürzeren Wurfschaufel einen Abstand von 250 bis 350 mm, vorzugsweise etwa 305 mm zur Drehachse aufweist, daß das äußere Abwurfende der kürzeren Wurfschaufel einen Abstand von 450 bis 500 mm, vorzugsweise 475 mm zur Drehachse aufweist, daß der Beginn der Durchtrittsöffnung der längeren Wurfschaufel einen Abstand von 360 bis 460 mm, vorzugsweise etwa 410 mm zur Drehachse aufweist, und daß das äußere Abwurfende der längeren Wurfschaufel einen Abstand von 550 bis 650 mm, vorzugsweise etwa 600 mm zur Drehachse aufweist.

Ebenfalls hat sich herausgestellt, um ein gleichmäßiges Streubild bei großen Arbeitsbreiten zu erreichen, daß der Beginn der Durchtrittsöffnung bei der kürzeren Wurfschaufel in einem derartigen Abstand zur Drehachse liegt, daß die Umlaufgeschwindigkeit an dieser Stelle 20 bis 26 m/sec., vorzugsweise 23 m/sec. beträgt, daß das äußere Abwurfende der kürzeren Wurfschaufel in einem derartigen Abstand zur Drehachse liegt, daß die Umlaufgeschwindigkeit 33 bis 39 m/sec., vorzugsweise 35,5 m/sec. beträgt, daß der Beginn der Durchtrittsöffnung bei längeren Wurfschaufel in einem derartigen Abstand zur Drehachse liegt, daß die Umlaufgeschwindigkeit an dieser Stelle 28-32 m/sec., vorzugsweise 31 m/sec. beträgt, daß das äußere Abwurfende der längeren Wurfschaufel in einem derartigen Abstand zur Drehachse liegt, daß die Umlaufgeschwindigkeit an dieser Stelle 42 bis 48 m/sec., vorzugsweise etwa 45 m/sec. beträgt.

Um in einfacher Weise den Schleuderdüngerstreuer von Normal- auf Spätdüngung und umgedreht umstellen zu können, ist vorgesehen, daß hinter der Rückwand der Wurfschaufel im Bereich der Durchtrittsöffnung oder in dem sich an die Durchtrittsöffnung in radialer Richtung anschließenden Bereich eine nach oben richtbare oder gerichtete Fläche angeordnet oder anordbar ist.

Um in einfacher Weise das Flächenelement zur Düngerablenkung zur Spätdüngung an der Wurfschaufel bzw. an der Schleuderscheibe anbringen zu können, ist vorgesehen, daß hinter der Wurfschaufel eine Halterung angeordnet ist, das an dieser Halterung die nach oben gerichtete und/oder richtbare Flächenelement angeordnet und / oder anordbar ist.

Um in die Wurfschaufeln zwei Arbeitsbreitenbereiche für einen großen Arbeitsbreitenbereich bis 48 m und mehr und einen kleineren Arbeitsbreitenbereich bis etwa 36 m in die Wurfschaufeln integrieren zu können, ist vorgesehen, das äußere Teil der Wurfschaufel in der eingeschobenen Position die Durchtrittsöffnung abdeckt und in der ausgezogenen Position die Durchtrittsöffnung jeweils freigibt.

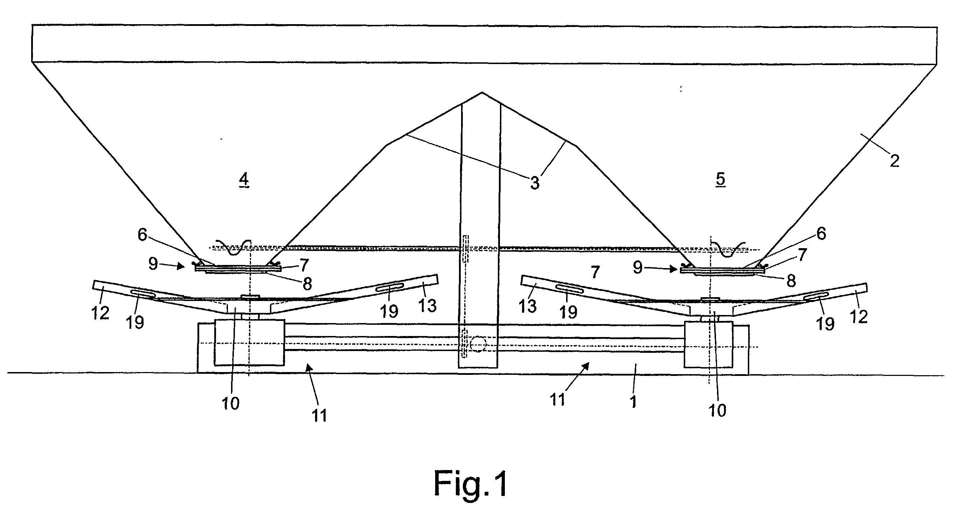

Weitere Einzelheiten der Erfindung sind den übrigen Unteransprüchen und der Beispielsbeschreibung sowie den Zeichnungen zu entnehmen. Hierbei zeigen
- Fig.1: einen Schleuderdüngerstreuer in der Ansicht von hinten und in Prinzipdarstellung,
- Fig.2: die in Fahrtrichtung gesehen rechte Schleuderscheibe in der Draufsicht,

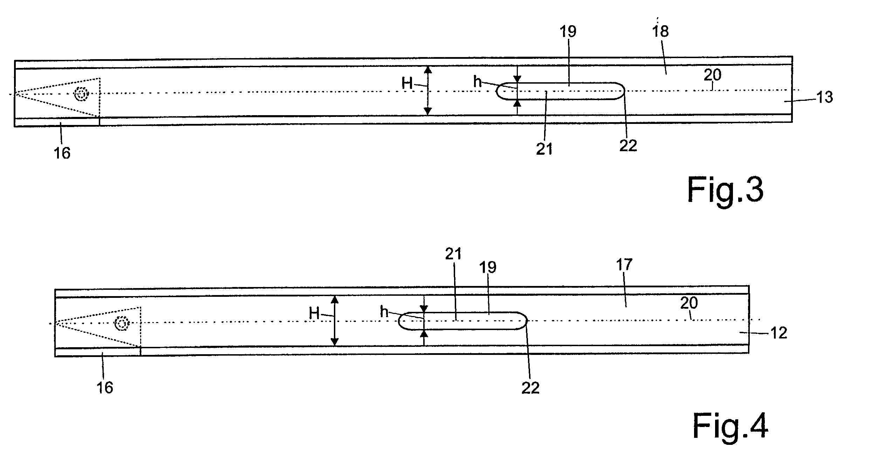

- Fig.3: die längere Wurfschaufel in der Ansicht III-III,
- Fig.4: die kürzere Wurfschaufel in der Ansicht IV-IV,
- Fig.5: eine weitere Schleuderscheibe mit zwei Wurfschaufeln,
- Fig.6: eine weitere Schleuderscheibe mit zwei Wurfschaufeln und
- Fig.7: eine weitere Schleuderscheibe mit zwei Wurfschaufeln.
- Fig.8: eine weitere Schleuderscheibe mit Wurfschaufeln in der Draufsicht und in Prinzipdarstellung,
- Fig.9: eine Wurfschaufel in der Draufsicht, in vergrößertem Maßstab, wobei hinter der Durchtrittsöffnung eine Leitfläche angeordnet ist,
- Fig.10: die Wurfschaufel gemäß Fig.9 in der Ansicht X-X,
- Fig.11: eine weitere Wurfschaufel in der Vorderansicht und
- Fig.12: die Wurfschaufel gemäß Fig.11, jedoch mit einer anderen Einstellung.

Der Schleuderdüngerstreuer weist den Rahmen 1 mit dem Vorratsbehälter 2 auf. Über nicht dargestellte Kupplungselemente, die an dem Rahmen 1 angeordnet sind, ist der Schleuderdüngerstreuer in bekannter und daher nicht näher dargestellter Weise an den Dreipunktkraftheber eines Ackerschleppers anzukuppeln. Der Vorratsbehälter 2 ist durch das dachförmige Mittelteil 3 in die beiden Auslauftrichter 4 und 5 aufgeteilt, deren unteren Enden 6 jeweils durch die aus einer Bodenplatte 7, in welcher sich eine Auslauföffnung befindet und einen die Auslauföffnung in einstellbarer Weise einstellbare bzw. verschließenden Schieber 8 bestehenden Dosierorgan 9 abgeschlossen. Über die Dosierorgane 9 werden den unterhalb jedes Dosierorgans 9 angeordneten Schleuderscheiben 10 das Material in einstellbarer Weise zugeführt. Die Schleuderscheiben 10 werden über den Antriebsstrang 11 von einer Kraftquelle rotierend angetrieben. Auf jeder Schleuderscheibe 10 ist eine kürzere 12 und eine längere Wurfschaufel 13 in Scheibenebene winkelverschwenkbar und in unterschiedlichen Winkeln einstellbar angeordnet. Der Schleuderdüngerstreuer ist zum Ausbringen von Düngermaterialien für Arbeitsbreiten von 40 - 48 m und mehr vorgesehen.

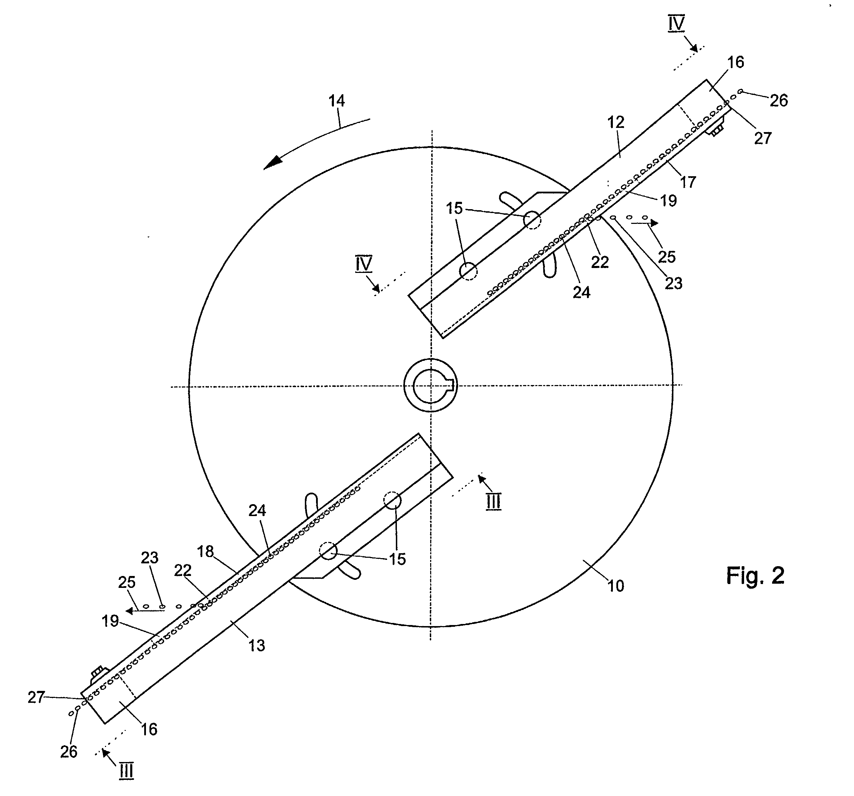

In Fig.2 ist die in Fahrtrichtung gesehen rechte Schleuderscheibe 10, die in Pfeilrichtung 14 rotierend angetrieben wird, auf einer Antriebswelle angeordnet. Die linke Schleuderscheibe ist zu der in Fig.2 dargestellten Schleuderscheibe 10 mit den Wurfschaufeln 12 und 13 spiegelbildlich ausgebildet. Die Schleuderscheiben 10 werden in einem entgegesetzten Drehsinn zueinander rotierend angetrieben. Die Wurfschaufeln 12 und 13 sind mittels der beiden Bolzen 15 auf der Schleuderscheibe 10 in Scheibenebene anhand von nicht dargestellten Markierungselementen winkelverstellbar und in unterschiedlichen Winkel festsetzbar angeordnet. An dem Abwurfende jeder Wurfschaufel 12 bzw. 13 ist im äußeren Bereich eine untere verschwenkbare Leitfläche 16 angeordnet, um in einfacher Weise das Normal- oder Spätdüngen durchführen zu können.

In der aufrechten Rückwand 17 bzw. 18 der rinnenförmig ausgebildeten Wurfschaufeln 12 und 13 ist jeweils eine schlitzförmige Durchtrittsöffnung 19 vorgesehen.

Die Durchtrittsöffnungen 19 weisen eine geringere Höhe h als die Rückwand 17 bzw. 18 auf. Die Höhe h der Durchtrittsöffnung 17 bzw. 18 beträgt etwa ¼ bis ¾, vorzugsweise etwa 1/3 der Höhe H der Rückwand 19. Die Durchtrittsöffnung 19 ist mittig zu der sich in radialer Richtung erstreckenden Mittellängsachse 20 der Rückwand 17 bzw. 19 der Wurfschaufel 12 bzw. 13 angeordnet. Hierbei ist die Durchtrittsöffnung 19 etwa auf halber Länge der Wurfschaufel 12 bzw. 13 angeordnet und zwar, gesehen von der Scheibenmitte aus, im wesentlichen in der äußeren Hälfte der Länge der Wurfschaufel 12 bzw. 13. Hierbei ist der Beginn der Durchtrittsöffnung 19 so gelegt, daß er sich etwa in dem Bereich befindet, in welchem die Abfluggeschwindigkeit der Düngerkörner für die halbe Arbeitsbreite erreicht wird. Desweiteren erstreckt sich die Längsmittellinie 21 der schlitzförmigen Durchtrittsöffnung 19 parallel zur Längmittellinie 20 der Rückwand 17 bzw. 19 der Wurfschaufel 12 bzw. 13.

Die Funktionsweise der in der Rückwand 17 bzw. 19 der Wurfschaufel 12 bzw. 13 angeordneten Durchtrittsöffnung 19 ist folgende:

Über das jeweilige Dosierorgan 9 wird der sich im Vorratsbehälter 1 befindliche Dünger in einstellbaren Mengen auf die jeweilige Schleuderscheibe 10 aufgegeben. Der aus dem Dosierorgan 9 herauslaufende Düngemittelstrom wird von den Wurfschaufeln 12 bzw. 13 erfaßt und innerhalb der Wurfschaufeln 12 und 13 aufgrund der wirkenden Radial- und Fliegkräfte nach außen beschleunigt, so daß der Dünger aufgrund der Auslegung der Schleuderscheiben 10 und der Wurfschaufeln 12 bzw. 13 (Länge der Wurfschaufeln 12 bzw. 13 und Drehzahl der Schleuderscheiben 10) über eine Arbeitsbreite von 40 - 48 m und mehr in gleichmäßiger Weise verteilt werden kann. Durch die Überlappung der nebeneinander liegenden Arbeitsbahnen ergibt sich eine gleichmäßige Düngerverteilung. Wenn der Dünger innerhalb der Wurfschaufeln 12 bzw. 13 beschleunigt wird und den Beginn 20 der Durchtrittsöffnung 19 erreicht, so wird ein Teil 23 des beschleunigten Düngemittelstroms 24 durch die Austrittsöffnung 19 in Pfeilrichtung 25 austreten und in einer kleiner Wurfweite verteilt als der übrige Düngemittelstrom 26, der an der Austrittsöffnung 19 vorbei die gesamte Wurfschaufel 12 bzw. 13 durchläuft und mit einer größeren Wurfweite abgeworfen wird. Dadurch, daß ein Teil 23 des beschleunigten Düngemittelstroms 4 aus der Durchtrittsöffnung 19 austritt, werden pro Wurfschaufel 12 bzw. 13 zwei Streufächer erzeugt, wobei die aus den Durchtrittsöffnungen 19 austretenden Düngemittelströme jeweils in einem innenliegenden Streufächer und der mit dem Ende 2 der Wurfschaufel 12 bzw. 13 abgeworfene Düngemittelstrom 26 jeweils in einem äußeren Streufächer verteilt wird. Durch die entsprechende Wahl der Größe der Durchtrittsöffnung 19 läßt sich eine sehr gleichmäßige Düngerverteilung auch bei Arbeitsbreiten über 40 - 48 m und mehr erreichen.

Wie in Fig.2 schematisch dargestellt ist, tritt jeweils ein Teil 23 des in den Wurfschaufeln 12 bzw. 13 befindlichen Düngerstroms 24 aus dem Schlitz 19 aus, während der übrige Teil 26 weiter von der Wurfschaufel 12 bzw. 13 jeweils nach außen beschleunigt wird.

Die vorbeschriebene Streuweise läßt sich auch bei Schleuderdüngerstreuern anwenden, bei denen die Wurfschaufeln und die Auslauföffnungen, über welche das zu verteilende Material den Schleuderscheiben 10 in einstellbaren Mengen zugeführt wird, derart einander zugeordnet sind, daß die von den beiden Schleuderscheiben 10 ausgehenden Wurfbahnen des Streumaterials im mittleren Streubereich des Schleuderdüngerstreuers gegeneinander gerichtet sind und einander überlappende, etwa segmentförmige Streubilder spiegelsymmetrisch zur Längsachse des Streuers entstehen. Hierbei werden dann die Schleuderscheiben 10 derart angetrieben, daß sie, bezogen auf die Fahrtrichtung, im hinteren Bereich aufeinander zudrehen. Es ist auch möglich, in dem Antrieb für die Schleuderscheiben 10 eine Drehrichtungsänderungsvorrichtung zur Einstellung der Drehrichtung der Schleuderscheiben 10 vorzusehen, so daß die Schleuderscheiben 10 wahlweise derart angetrieben werden, daß sie bezogen auf die Fahrtrichtung, im hinteren Bereich aufeinander zudrehen und im hinteren Bereich auseinanderdrehen. Somit kann der Schleuderstreuer jeweils auf die entsprechende Arbeitsweise eingestellt werden, wobei die Wurfschaufeln dann entsprechend ausgebildet sind. Die Funktionsweise des Abwerfens des Düngerstroms geschieht dann je nach Drehrichtung jeweils entsprechend der vorbeschriebenen Arbeitsweisen.

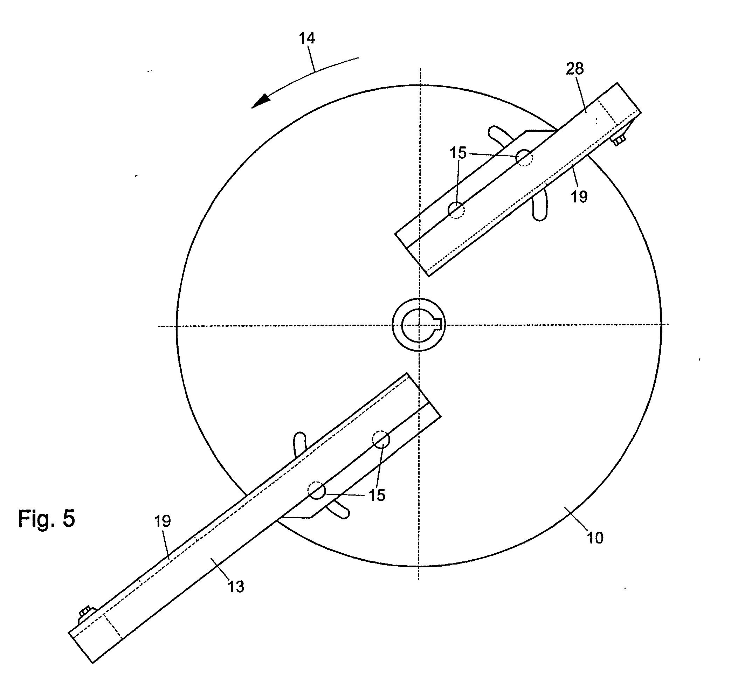

Bei der Schleuderscheibe 10 gemäß Fig.5 ist die kürzere Wurfschaufel 12 gemäß Fig.2 gegen die in Fig.5 dargestellte kürzere Wurfschaufel 28 ausgetauscht. Dieser Austausch findet statt, wenn beispielsweise der Dünger nur über eine Arbeitsbreite von 40 bzw. 42 m verteilt werden soll, im Gegensatz zu dem Einsatzfall der Schleuderscheibe 10 gemäß Fig.2 für 48 m und mehr.

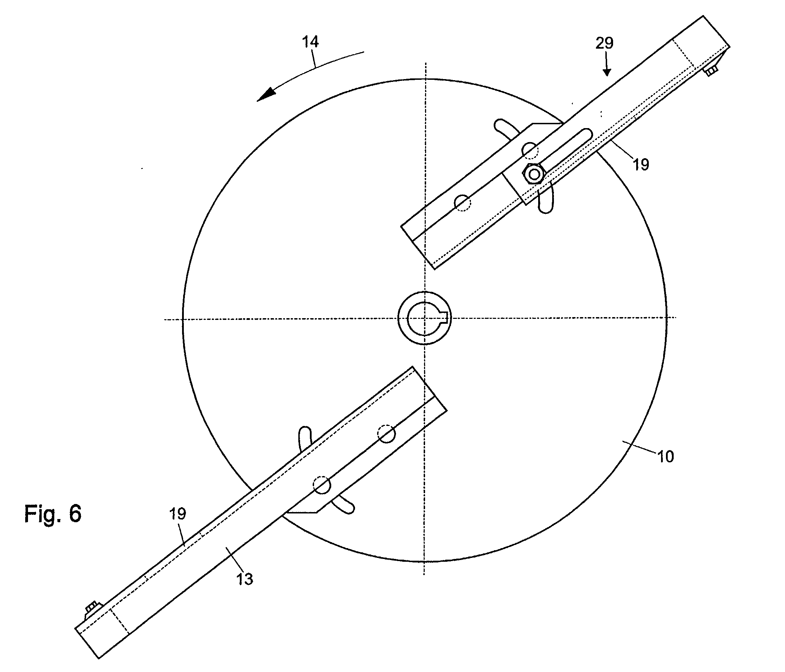

Die Fig.6 zeigt die Schleuderscheibe 10 mit der längeren Wurfschaufel 13 und eine kürzeren teleskopartig ausgebildete Wurfschaufel 29, die aufgrund ihrer teleskopartigen Ausbildung in der in Fig.6 dargestellten ausgezogenen Position oder in einer eingeschobenen Position, in dem sie eine kürzere wirksame Länge aufweist, eingestellt werden kann. Hierdurch ist eine Anpassung an unterschiedliche Arbeitsbreiten, um eine gleichmäßige Düngerverteilung bei diesen verschiedenen Arbeitsbreiten erreichen zu können, möglich. In der Rückwand der Wurfschaufeln 13 bzw. 29 sind jeweils wieder Durchtrittsöffnungen 19 angeordnet. Diese Durchtrittsöffnungen haben die gleiche Wirkungsweise wie anhand des Ausführungsbeispieles gemäß Fig.2 beschrieben ist.

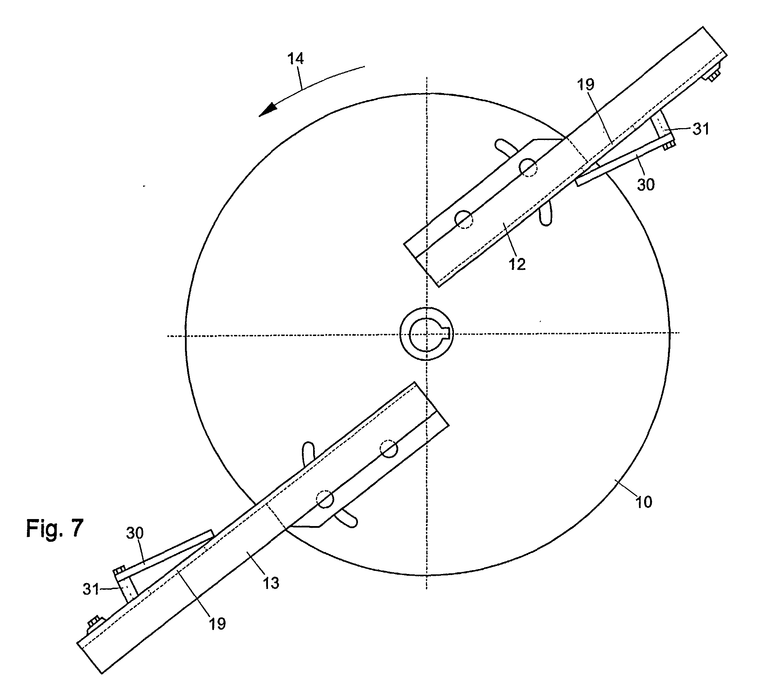

Das Ausführungsbeispiel gemäß Fig.7 unterscheidet sich von dem Ausführungsbeispiel gemäß Fig.2 dadurch, daß auf der Rückseite der Wurfschaufel 12 bzw. 13 eine im Bereich der Durchtrittsöffnung 19 beginnende weitere Wurfschaufel 30 angeordnet ist. Die hintere Wurfschaufel 30 schließt einen sich nach außen öffnenden Winkel mit der vorderen Wurfschaufel 12 bzw. 13 ein. Ebenfalls ist an der der Rückwand der Wurfschaufel 12 bzw. 13 angeordneten Rückwand eine nach oben richtbare oder gerichtete Fläche 31 zur Durchführung der Spätdüngung angeordnet.

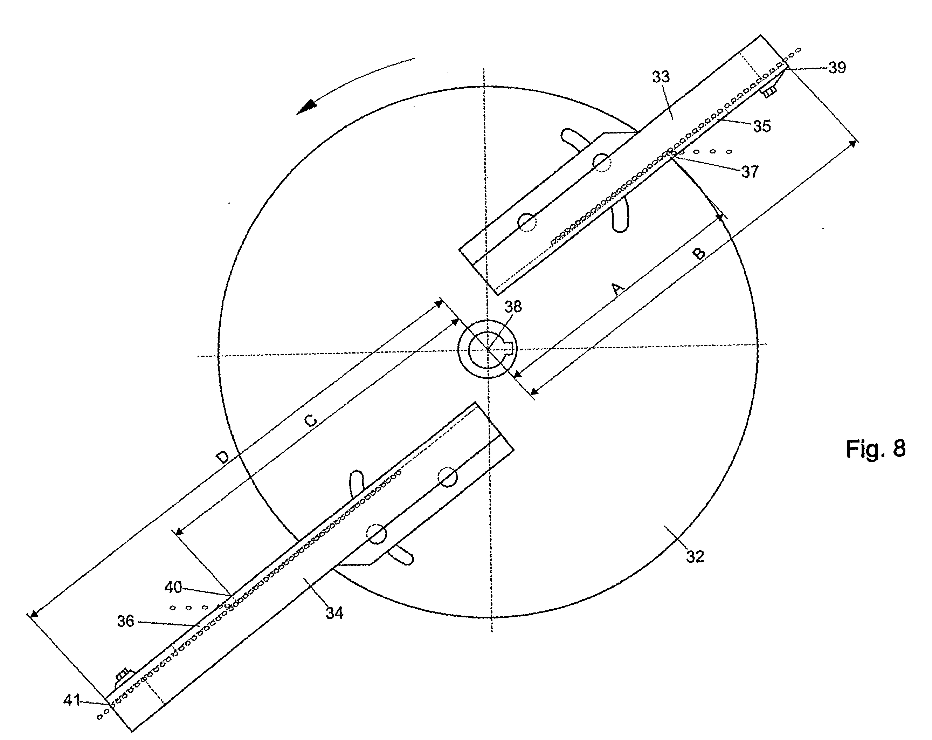

Die Schleuderscheibe 32 gemäß Fig.8 weist eine kürzere Wurfschaufel 33 und eine längere Wurfschaufel 34 auf. In der kürzeren Wurfschaufel 33 ist die Durchtrittsöffnung 35 und in der längeren Wurfschaufel 34 die Durchtrittsöffnung 36 angeordnet.

Die Schleuderscheiben 32, von denen in Fig.8 nur die in Fahrtrichtung gesehen rechte Schleuderscheibe dargestellt ist, sind auf den Schleuderscheibenantriebswellen des Antriebsstranges 11 anzuordnen und werden im entgegengesetzten Drehsinn angetrieben. Die linke Schleuderscheibe des Schleuderdüngerstreuers ist spiegelbildlich zu der in Fig.8 dargestellten Schleuderscheiben 32 ausgebildet.

Die Schleuderscheiben 32 werden mit einer Drehzahl von 750 U/min, vorzugsweise 720 U/min durch den Antriebsstrang 11 rotierend angetrieben. Der Beginn 37 der Durchtrittsöffnung 35 der kürzeren Wurfschaufel 33 weist einen Abstand A von 250 bis 350 mm, vorzugsweise etwa 305 mm zur Drehachse 38 auf. Hierbei liegt der Beginn 37 der Durchtrittsöffnung 35 bei der kürzeren Wurfschaufel 33 somit in einem Abstand A zur Drehachse 38, daß die Umlaufgeschwindigkeit an dieser Stelle 20-26 m/sec., vorzugsweise 23 m/sec. beträgt. Das äußere Abwurfende 39 der kürzeren Wurfschaufel 33 weist einen Abstand B von 450-500 mm, vorzugsweise 475 mm zur Drehachse 38 auf. Somit liegt das äußere Abwurfende 39 der kürzeren Wurfschaufel 33 in einem Abstand B zur Drehachse, daß die Umlaufgeschwindigkeit 33-39 m/sec., vorzugsweise 35,5 m/sec. beträgt.

Der Beginn 40 der Durchtrittsöffnung 36 der längeren Wurfschaufel 34 weist einen Abstand C von 360-460 mm, vorzugsweise etwa 410 mm zur Drehachse 38 auf. Somit liegt der Beginn 40 der Durchtrittsöffnung 36 bei der längeren Wurfschaufel 34 in einem Abstand C zur Drehachse 38, so daß die Umfangsgeschwindigkeit an dieser Stelle 28-32 m/sec., vorzugsweise 31 m/sec. beträgt. Das äußere Abwurfende41 der längeren Wurfschaufel 34 weist einen Abstand D von 550-650 mm, vorzugsweise etwa 600 mm zur Drehachse 38 auf. Somit liegt das äußere Abwurfende 41 der längeren Wurfschaufel 34 in einem Abstand D zur Drehachse 38, so daß die Umlaufgeschwindigkeit an dieser Stelle 42-48 m/sec., vorzugsweise etwa 45 m/sec. beträgt.

Durch die Anordnung der Durchtrittsöffnungen 35 und 36 in der kurzen und langen Wurfschaufel werden pro Wurfschaufel 33 und 34 zwei Streufächer erzielt, so daß jede Schleuderscheibe 32 insgesamt vier Streufächer erzeugt. Ein Schleuderdüngerstreuer mit zwei Schleuderscheiben 32, die entsprechend ausgebildete Wurfschaufeln 33 und 34 mit Durchtrittsöffnungen 35 und 36 aufweisen, erzeugt also insgesamt acht Streufächer, die insgesamt eine gleichmäßige Düngerverteilung über eine große Arbeitsbreite bis 48 m ergeben.

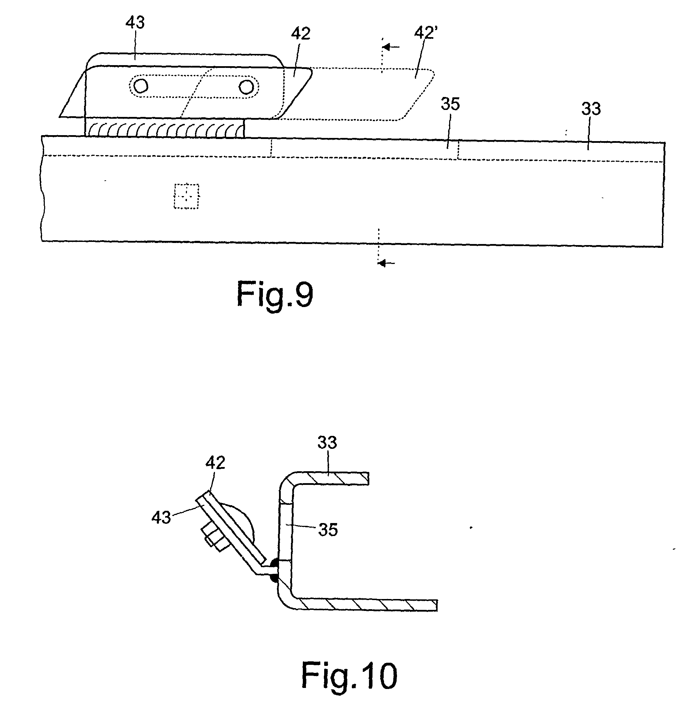

Die Fig.9 und 10 zeigen eine weitere Einzelheit einer Wurfschaufel 33 bzw. 34 mit einer Durchtrittsöffnung 35 bzw. 36, die zum Spätdüngen geeignet ist. Hierzu ist in dem Bereich der Durchtrittsöffnung 35 bzw. 36 hinter der Wurfschaufel 33 bzw. 34 eine nach oben gerichtete Fläche 42 verschiebbar angeordnet. An der Wurfschaufel 33 bzw. 34 ist die Halterung 43 angebracht, an welcher die nach oben gerichtete Fläche 42 aufgrund des Langloches 45 in die mit durchzogenen Linien dargestellte Außerbetriebsposition und in die mit gestrichelten Linien dargestellte Betriebsposition 42' für das Spätdüngen bringbar und einstellbar ist.

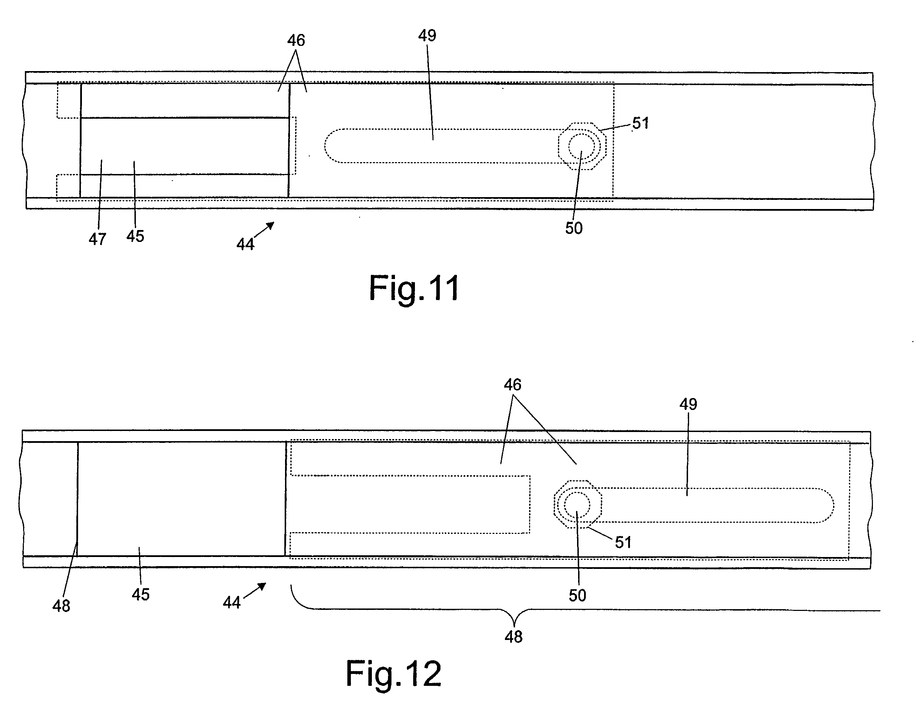

Die Wurfschaufel 44 gemäß Fig.11 und 12 weist die Durchtrittsöffnung 45 auf. Der Durchtrittsöffnung 45 ist der Schieber 46 mit der schlitzförmigen Durchtrittsöffnung 47 zugeordnet. In der in Fig.11 dargestellten Position des Schiebers 46 deckt der Schieber 46 die Durchtrittsöffnung 45 teilweise ab, so daß durch die kleine Durchtrittsöffnung 47 der Düngerstrom teilweise austreten kann. In dieser Einstellung des Schiebers 46 kann der Dünger durch diese Durchtrittsöffnung 47 austreten und die Wurfschaufel 44 gemäß Fig.11 arbeitet entsprechend den in Fig.8 dargestellten Wurfschaufeln und es werden pro Wurfschaufel 44 zwei Streufächer erzeugt. Um einen kleineren Arbeitsbreitenbereich abdecken zu können, läßt sich der Schieber 46 gegenüber der Wurfschaufel 44 verschieben. In dieser in Fig.12 dargestellten Position gibt der Schieber 46 die Durchtrittsöffnung frei, so daß der gesamte, der Wurfschaufel zugeführte Dünger durch die Durchtrittsöffnung 45 durchtritt und somit bereits an der Stelle 48, d.h. dem Beginn der Durchtrittsöffnung 45, abgeworfen wird. Der übrige, äußere Bereich 48 der Wurfschaufel 44 ist in dieser Einstellung wirkungslos. In dem Schieber 46 befindet sich das Langloch 49, in welchem die Schraube 50 faßt. Auf der Schraube 50 ist das als Mutter 51 ausgebildete Festsetzelement zur Festsetzung des Schiebers 46 in der vorgesehenen Position angeordnet.

## Patentansprüche

1. Schleuderdüngerstreuer mit zwei rotierend angetriebenen Schleuderscheiben, auf denen jeweils zwei rinnenförmig ausgebildete Wurfschaufeln unterschiedlicher Länge angeordnet sind, die eine aufrechte Rückwand aufweisen, wobei in der Rückwand (17, 18) jeder Wurfschaufel (12, 13) eine schlitzförmige Durchtrittsöffnung (19, 35, 36) vorgesehen ist,
**dadurch gekennzeichnet, daß** die Mittellängsachse der Durchtrittsöffnung (19, 35, 36) auf der sich in radialer Richtung erstreckenden Mittellängsachse (20) der Rückwand (17, 18) der Wurfschaufel (12,13,28,29) angeordnet ist.

2. Schleuderdüngerstreuer nach Anspruch 1, **dadurch gekennzeichnet, daß** die Durchtrittsöffnung (19) etwa auf halber Länge der Wurfschaufel (12, 13, 28, 29) angeordnet ist.

3. Schleuderdüngerstreuer nach einem oder mehreren der vorstehenden Ansprüche, **dadurch gekennzeichnet, daß** der Beginn (22) der Durchtrittsöffnung (19) sich etwa in dem Bereich befindet, in welchem die Abfluggeschwindigkeit der Düngerkömer für die halbe Arbeitsbreite erreicht wird.

4. Schleuderdüngerstreuer nach einem oder mehreren der vorstehenden Ansprüche, **dadurch gekennzeichnet, daß** zumindest eine, vorzugsweise die kürzere Wurfschaufel (29) teleskopartig und/oder längenverstellbar ausgebildet ist.

5. Schleuderdüngerstreuer nach einem oder mehreren der vorstehenden Ansprüche, **dadurch gekennzeichnet, daß** verschiedene Wurfschaufeln (12, 28, 29) verschiedener Länge, vorzugsweise für die kürzere Wurfschaufel (12, 28, 29) und gegeneinander tauschbar auf der jeweiligen Schleuderscheibe (10) anordbar vorgesehen sind.

6. Schleuderdüngerstreuer nach einem oder mehreren der vorstehenden Ansprüche, **dadurch gekennzeichnet, daß** die Längsmittellinie (21) der schlitzförmigen Durchtrittsöffnung (19) sich parallel zur Längsmittellinie (20) der Wurfschaufel (12, 13, 28, 29) erstreckt.

7. Schleuderdüngerstreuer nach einem oder mehreren der vorstehenden Ansprüche, **dadurch gekennzeichnet, daß** hinter jeder Wurfschaufel (12, 13) eine im Bereich der Durchtrittsöffnung (19) beginnende weitere Wurfschaufel (30) angeordnet ist.

8. Schleuderdüngerstreuer nach Anspruch 7, **dadurch gekennzeichnet, daß** die hintere Wurfschaufel (30) mit der vorderen Wurfschaufel (12, 13) einen sich nach außen öffnenden Winkel einschließt.

9. Schleuderdüngerstreuer nach einem oder mehreren der vorstehenden Ansprüche, **dadurch gekennzeichnet, daß** die Wurfschaufeln (12, 13, 28, 29, 30) in Scheibenebene winkelverschwenkbar auf der Schleuderscheibe (10) angeordnet sind.

10. Schleuderdüngerstreuer nach einem oder mehreren der vorstehenden Ansprüche, **dadurch gekennzeichnet, daß** hinter der Rückwand der Wurfschaufel (12, 13) im Bereich der Durchtrittsöffnung (19) oder in dem sich an die Durchtrittsöffnung (19) in radialer Richtung anschließenden Bereich eine nach oben richtbare oder gerichtete Fläche (31) angeordnet oder anordbar ist.

11. Schleuderdüngerstreuer nach Anspruch 1 **dadurch gekennzeichnet, daß** die Wurfschaufeln und die Auslauföffnungen, über welche das zu verteilende Material den Schleuderscheiben (10) in einstellbaren Mengen zugeführt wird, derart zugeordnet sind, daß die von den beiden Schleuderscheiben (10) ausgehenden Wurfbahnen des Streumaterials im mittleren Streubereich des Schleuderdüngerstreuers gegeneinander gerichtet sind und einander überlappende, etwa segmentförmige Streubilder spiegelsymmetrisch zur Längsmittelachse des Streuers entstehen.

12. Schleuderdüngerstreuer nach Anspruch 1 und/oder 11, **dadurch gekennzeichnet, daß** die Schleuderscheiben (10) derart angetrieben werden, daß sie, bezogen auf die Fahrtrichtung, im hinteren Bereich aufeinander zudrehen.

13. Schleuderdüngerstreuer nach einem oder mehreren der vorstehenden Ansprüche, **dadurch gekennzeichnet, daß** eine Drehrichtungsänderungsvorrichtung zur Einstellung der Drehrichtung der Schleuderscheiben (10) vorgesehen ist, so daß wahlweise die Schleuderscheiben (10) derart angetrieben werden, daß sie, bezogen auf die Fahrtrichtung im hinteren Bereich aufeinander zudrehen oder im hinteren Bereich auseinanderdrehen.

14. Schleuderdüngerstreuer nach Anspruch 1, **dadurch gekennzeichnet, daß** die Drehzahl der Schleuderscheiben 700 bis 750 U/min, vorzugsweise 720 U/min beträgt, daß der Beginn (37) der Durchtrittsöffnung (35) der kürzeren Wurfschaufel (33) einen Abstand (A) von 250 bis 350 mm, vorzugsweise etwa 305 mm zur Drehachse (38) aufweist, daß das äußere Abwurfende (39) der kürzeren Wurfschaufel (33) einen Abstand (B) von 450 bis 500 mm, vorzugsweise 475 mm zur Drehachse (38) aufweist, daß der Beginn (40) der Durchtrittsöffnung (36) der längeren Wurfschaufel (34) einen Abstand (C) von 360 bis 460 mm, vorzugsweise etwa 410 mm zur Drehachse (38) aufweist, und daß das äußere Abwurfende (41) der längeren Wurfschaufel (34) einen Abstand (D) von 550 bis 650 mm, vorzugsweise etwa 600 mm zur Drehachse (38) aufweist.

15. Schleuderdüngerstreuer nach Anspruch 1, **dadurch gekennzeichnet, daß** der Beginn (37) der Durchtrittsöffnung (35) bei der kürzeren Wurfschaufel (33) in einem derartigen Abstand (A) zur Drehachse (38) liegt, daß die Umlaufgeschwindigkeit an dieser Stelle 20 bis 26 m/sec., vorzugsweise 23 m/sec. beträgt, daß das äußere Abwurfende (39) der kürzeren Wurfschaufel (33) in einem derartigen Abstand (B) zur Drehachse (38) liegt, daß die Umlaufgeschwindigkeit 33 bis 39 m/sec., vorzugsweise 35,5 m/sec. beträgt, daß der Beginn (40) der Durchtrittsöffnung (36) bei der längeren Wurfschaufel (34) in einem derartigen Abstand (C) zur Drehachse (38) liegt, daß die Umlaufgeschwindigkeit an dieser Stelle 28-32 m/sec., vorzugsweise 31 m/sec. beträgt, daß das äußere Abwurfende (41) der längeren Wurfschaufel (34) in einem derartigen Abstand (D) zur Drehachse (38) liegt, daß die Umlaufgeschwindigkeit an dieser Stelle 42 bis 48 m/sec., vorzugsweise etwa 45 m/sec. beträgt.

16. Schleuderdüngerstreuer nach Anspruch 1, **dadurch gekennzeichnet, daß** hinter der Rückwand der Wurfschaufel (33, 34) im Bereich der Durchtrittsöffnung (35, 36) oder in dem sich an die Durchtrittsöffnung (35, 36) in radialer Richtung anschließenden Bereich eine nach oben richtbare oder gerichtete Fläche (42, 42') angeordnet oder anordbar ist.

17. Schleuderdüngerstreuer nach Anspruch 16, **dadurch gekennzeichnet, daß** hinter der Wurfschaufel (33, 34) eine Halterung (43) angeordnet ist, das an dieser Halterung (43) die nach oben gerichtete und/oder richtbare Flächenelement (42, 42') angeordnet und/oder anordbar ist.

18. Schleuderdüngerstreuer nach einem oder mehreren der vorstehenden Ansprüche, **dadurch gekennzeichnet, daß** das Flächenelement (42, 42') parallel zur Längsrichtung der Wurfschaufel (33, 34) verschiebbar angeordnet ist.

19. Schleuderdüngerstreuer nach einem oder mehreren der vorstehenden Ansprüche, **dadurch gekennzeichnet, daß** die Wurfschaufeln aus zwei teleskopartigen zueinander verschiebbaren Teilen bestehen, daß das äußere Teil der Wurfschaufel in der eingeschobenen Position die Durchtrittsöffnung abdeckt und in der ausgezogenen Position die Durchtrittsöffnung jeweils freigibt.

20. Schleuderdüngerstreuer nach einem oder mehreren der vorstehenden Ansprüche, **dadurch gekennzeichnet, daß** in dem Bereich der Durchtrittsöffnung (45) ein Schieber (46) zum teilweise Abdecken der Durchtrittsöffnung (45) an der Wurfschaufel (44) verschiebbar angeordnet ist.

## Claims

1. Centrifugal fertiliser spreader, having two rotatably driven centrifugal discs on each of which there are disposed two channel-like throwing vanes of adjustable length, which vanes have a vertically extending rear wall, a slot-like through-aperture (19, 35, 36) being provided in the rear wall (17, 18) of each throwing vane (12, 13), **characterised in that** the central longitudinal axis of the through-aperture (19, 35, 36) is disposed on the central longitudinal axis (20) of the rear wall (17, 18) of the throwing vane (12, 13, 28, 29) extending in the radial direction.

2. Centrifugal fertiliser spreader according to claim 1, **characterised in that** the through-aperture (19) is disposed substantially halfway along the throwing vane (12, 13, 28, 29).

3. Centrifugal fertiliser spreader according to one or more of the preceding claims, **characterised in that** the beginning (22) of the through-aperture (19) is situated substantially in the region in which the take-off speed of the fertiliser particles is reached for half the working width.

4. Centrifugal fertiliser spreader according to one or more of the preceding claims, **characterised in that** at least one throwing vane, preferably the shorter throwing vane (29), is telescopic and/or longitudinally displaceable.

5. Centrifugal fertiliser spreader according to one or more of the preceding claims, **characterised in that** various throwing vanes (12, 28, 29) of adjustable length are provided so as to be exchangeable preferably for the shorter throwing vane (12, 28, 29) and with one another and so as to be disposable on the respective centrifugal disc (10).

6. Centrifugal fertiliser spreader according to one or more of the preceding claims, **characterised in that** the central longitudinal axis (21) of the slot-like through-aperture (19) extends parallel to the central longitudinal axis (20) of the throwing vane (12, 13, 28, 29).

7. Centrifugal fertiliser spreader according to one or more of the preceding claims, **characterised in that** an additional throwing vane (30), which begins in the region of the through-aperture (19), is disposed behind each throwing vane (12, 13).

8. Centrifugal fertiliser spreader according to claim 7, **characterised in that** the rear throwing vane (30) forms, with the front throwing vane (12, 13), an outwardly opening angle.

9. Centrifugal fertiliser spreader according to one or more of the preceding claims, **characterised in that** the throwing vanes (12, 13, 28, 29, 30) are disposed on the centrifugal disc (10) so as to be angularly pivotable in the disc plane.

10. Centrifugal fertiliser spreader according to one or more of the preceding claims, **characterised in that** an upwardly orientatable or orientated face (31) is disposed or is disposable behind the rear wall of the throwing vane (12, 13) in the region of the through-aperture (19) or in the region communicating with the through-aperture (19) in the radial direction.

11. Centrifugal fertiliser spreader according to claim 1, **characterised in that** the throwing vanes and the outlet apertures, via which the material to be distributed is supplied to the centrifugal discs (10) in adjustable quantities, are associated with one another in such a manner that the throwing paths for the material to be spread, starting from the two centrifugal discs (10), are orientated towards each other in the central/mean spreading range of the centrifugal fertiliser spreader, and substantially segment-shaped spreading patterns, which overlap one another, are produced in mirror-symmetrical manner relative to the central longitudinal axis of the spreader.

12. Centrifugal fertiliser spreader according to claim 1 and/or 11, **characterised in that** the centrifugal discs (10) are driven in such a manner that they rotate towards each other in the rear region when viewed with respect to the direction of travel.

13. Centrifugal fertiliser spreader according to one or more of the preceding claims, **characterised in that** a device for changing the direction of rotation is provided in order to adjust the direction of rotation of the centrifugal discs (10), so that the centrifugal discs (10) are selectively driven in such a manner that, when viewed with respect to the direction of travel, they rotate towards each other in the rear region or from each other in the rear region.

14. Centrifugal fertiliser spreader according to claim 1, **characterised in that** the rate of rotation of the centrifugal discs is 700 to 750 r/min., preferably 720 r/min., **in that** the beginning (37) of the through-aperture (35) of the shorter throwing vane (33) has a spacing (A) of 250 to 350 mm, preferably substantially 305 mm, from the axis of rotation (38), **in that** the outer discharge end (39) of the shorter throwing vane (33) has a spacing (B) of 450 to 500 mm, preferably 475 mm, from the axis of rotation (38), **in that** the beginning (40) of the through-aperture (36) of the longer throwing vane (34) has a spacing (C) of 360 to 460 mm, preferably substantially 410 mm, from the axis of rotation (38), and **in that** the outer discharge end (41) of the longer throwing vane (34) has a spacing (D) of 550 to 650 mm, preferably substantially 600 mm, from the axis of rotation (38).

15. Centrifugal fertiliser spreader according to claim 1, **characterised in that**, in the case of the shorter throwing vane (33), the beginning (37) of the through-aperture (35) lies at such a spacing (A) from the axis of rotation (38) that the rotational speed is 20 to 26 m/sec., preferably 23 m/sec., at this location, **in that** the outer discharge end (39) of the shorter throwing vane (33) lies at such a spacing (B) from the axis of rotation (38) that the rotational speed is 33 to 39 m/sec., preferably 35.5 m/sec., **in that**, in the case of the longer throwing vane (34), the beginning (40) of the through-aperture (36) lies at such a spacing (C) from the axis of rotation (38) that the rotational speed is 28-32 m/sec., preferably 31 m/sec., at this location, and **in that** the outer discharge end (41) of the longer throwing vane (34) lies at such a spacing (D) from the axis of rotation (38) that the rotational speed is 42 to 48 m/sec., preferably substantially 45 m/sec., at this location.

16. Centrifugal fertiliser spreader according to claim 1, **characterised in that** a downwardly orientatable or orientated face (42, 42') is disposed or is disposable behind the rear wall of the throwing vane (33, 34) in the region of the through-aperture (35, 36) or in the region which communicates with the through-aperture (35, 36) in the radial direction.

17. Centrifugal fertiliser spreader according to claim 16, **characterised in that** a holder (43) is disposed behind the throwing vane (33, 34), and **in that** the upwardly orientated and/or orientatable face member (42, 42') is disposed and/or is disposable on this holder (43).

18. Centrifugal fertiliser spreader according to one or more of the preceding claims, **characterised in that** the face member (42, 42') is disposed so as to be displaceable parallel to the longitudinal direction of the throwing vane (33, 34).

19. Centrifugal fertiliser spreader according to one or more of the preceding claims, **characterised in that** the throwing vanes comprise two telescopic parts, which are displaceable relative to each other, and **in that** the outer part of the throwing vane covers the through-aperture in the retracted position and respectively exposes the through-aperture in the extended position.

20. Centrifugal fertiliser spreader according to one or more of the preceding claims, **characterised in that** a slide (46) is displaceably disposed on the throwing vane (44) in the region of the through-aperture (45) for the partial covering of the through aperture (45).

## Revendications

1. Epandeur centrifuge d'engrais comportant deux disques d'épandage entraînés en rotation, chaque disque étant muni de palettes d'éjection en forme de goulottes, ces palettes de longueurs différentes ayant une paroi arrière dirigée vers le haut, avec un orifice traversant (19, 35, 36) en forme de fente, dans la paroi arrière (1", 18) de chaque palette d'éjection (12, 13)
**caractérisé en ce que**
l'axe longitudinal médian de l'orifice traversant (19, 35, 36) correspond à l'axe longitudinal médian (20), s'étendant dans la direction radiale, de la paroi arrière (17, 18) des palettes d'éjection (12, 13, 28, 29).

2. Epandeur centrifuge d'engrais selon la revendication 1,
**caractérisé en ce que**
l'orifice de passage (19) se situe sensiblement à mi-longueur des palettes (12, 13, 28, 29).

3. Epandeur centrifuge d'engrais selon l'une ou plusieurs des revendications précédentes,
**caractérisé en ce que**
le début (22) de l'orifice de passage (19) se trouve dans la zone dans laquelle la vitesse d'éjection des grains d'engrais est celle correspondant à la moitié de la largeur d'épandage.

4. Epandeur centrifuge d'engrais selon l'une ou plusieurs des revendications précédentes,
**caractérisé en ce qu'**
au moins l'une et de préférence la plus courte des palettes d'éjection (29) est télescopique et/ou réglable en longueur.

5. Epandeur centrifuge d'engrais selon l'une ou plusieurs des revendications précédentes,
**caractérisé en ce qu'**
il comporte plusieurs palettes d'éjection (12, 28, 29) de longueurs différentes, de préférence remplaçables par des palettes d'éjection plus courtes (12, 28, 29) et échangeables les unes avec les autres sur un disque d'épandage (10).

6. Epandeur centrifuge d'engrais selon l'une ou plusieurs des revendications précédentes,
**caractérisé en ce que**
la ligne d'axe longitudinale (21) de l'orifice traversant (19) en forme de fente s'étend parallèlement à l'axe longitudinal (20) de la palette d'éjection (12, 13, 28, 29).

7. Epandeur centrifuge d'engrais selon l'une quelconque des revendications précédentes,
**caractérisé en ce que**
derrière chaque palette d'éjection (12, 13) se trouve le début d'une autre palette d'éjection (30) commençant au niveau de l'orifice traversant (19).

8. Epandeur centrifuge d'engrais selon la revendication 7,
**caractérisé en ce que**
la palette d'éjection (30), arrière, fait avec la palette d'éjection avant (12, 13), un angle ouvert vers l'extérieur.

9. Epandeur centrifuge d'engrais selon l'une ou plusieurs des revendications précédentes,
**caractérisé en ce que**
les palettes d'éjection (12, 13, 28, 29, 30) sont montées pivotantes angulairement sur le disque d'épandage (10) dans le plan du disque.

10. Epandeur centrifuge d'engrais selon l'une quelconque des revendications,
**caractérisé en ce que**
derrière la paroi arrière de la palette d'éjection (12, 13) au niveau de l'orifice traversant (19) ou dans la zone adjacente dans la direction radiale à l'orifice traversant (19), il y a une surface (31) dirigée ou susceptible d'être dirigée vers le haut.

11. Epandeur centrifuge d'engrais selon la revendication 1,
**caractérisé en ce que**
les palettes d'éjection et les orifices de sortie par lesquels la matière à distribuer est fournie en quantités réglables aux disques d'épandage (10) sont installés pour que les trajectoires de la matière d'épandage, sortant des deux disques d'épandage (10), soient dirigées l'une contre l'autre dans la zone d'épandage centrale de l'épandeur centrifuge et forment des images d'épandage sensiblement en forme de segments qui se chevauchent, de manière symétrique plane par rapport à l'axe longitudinal médian de l'épandeur.

12. Epandeur centrifuge d'engrais selon la revendication 1 et/ou 11,
**caractérisé en ce que**
les disques d'épandage (10) sont entraînés de façon à tourner l'un vers l'autre dans la zone arrière selon la direction de déplacement.

13. Epandeur centrifuge d'engrais selon l'une ou plusieurs des revendications précédentes,
**caractérisé par**
un dispositif de changement de sens de rotation pour régler le sens de rotation des disques d'épandage (10) qui permet d'entraîner les disques d'épandage (10) au choix pour que dans la zone arrière selon le sens de déplacement de la machine, les disques tournent l'un vers l'autre ou en s'écartant l'un de l'autre.

14. Epandeur centrifuge d'engrais selon la revendication 1,
**caractérisé en ce que**
la vitesse de rotation des disques d'épandage est de 700 à 750 T/min et de préférence 720 T/min,
le début (37) de l'orifice traversant (35) de la palette d'éjection la plus courte (33) est à une distance (A) comprise entre 250 et 350 mm, de préférence de l'ordre de 305 mm par rapport à l'axe de rotation (38),
l'extrémité d'éjection extérieure (39) de la palette d'éjection (33) la plus courte est à une distance (B) comprise entre 450 et 500 mm et de préférence 475 mm par rapport à l'axe de rotation (38),
le début (40) de l'orifice traversant (36) de la palette d'éjection (34) la plus longue est à une distance (C) comprise entre 360 et 460 mm, de préférence de l'ordre de 410 mm par rapport à l'axe de rotation (38), et l'extrémité d'éjection extérieure (43) de la palette d'éjection (34) la plus longue est à une distance (D) de 550 à 650 mm et de préférence de l'ordre de 600 mm par rapport à l'axe de rotation (38).

15. Epandeur centrifuge d'engrais selon la revendication 1,
**caractérisé en ce que**
le début (37) de l'orifice traversant (35) de la palette d'éjection (33) la plus courte se trouve à une distance (A) de l'axe de rotation (38) pour que la vitesse périphérique à cet endroit soit comprise entre 20 et 26 m/sec et de préférence égale à 23 m/sec,
l'extrémité d'éjection extérieure (39) de la palette d'éjection la plus courte (33) se trouve à une distance (B) de l'axe de rotation (38) pour que la vitesse périphérique soit comprise entre 33 et 39 m/sec, et de préférence égale à 35,5 m/sec,
le début (40) de l'orifice traversant (36) de la palette d'éjection la plus longue (34) se trouve à une distance (C) de l'axe de rotation (38) pour que la vitesse périphérique à cet endroit soit comprise entre 28 et 32 m/sec, et de préférence égale à 31 m/sec,
l'extrémité d'éjection extérieure (41) de la palette d'éjection la plus longue (34) se trouve à une distance (D) de l'axe de rotation (38) pour que la vitesse périphérique à cet endroit soit comprise entre 42 et 48 m/sec et de préférence égal à environ 45 m/sec.

16. Epandeur centrifuge d'engrais selon la revendication 1,
**caractérisé en ce que**
derrière la paroi arrière de la palette d'éjection (33, 34) au niveau de l'orifice traversant (35, 36) ou dans la zone adjacente à l'orifice traversant (35, 36) dans la direction radiale, il y a une surface (42, 42') dirigée ou susceptible d'être dirigée vers le haut.

17. Epandeur centrifuge d'engrais selon la revendication 16,
**caractérisé en ce qu'**
un support (43) est prévu derrière la palette d'éjection (33, 34) et l'élément de surface (42, 42') dirigé vers le haut et/ou susceptible d'être dirigé vers le haut est installé sur ce support (43).

18. Epandeur centrifuge d'engrais selon l'une ou plusieurs des revendications précédentes,
**caractérisé en ce que**
l'élément de surface (42, 42') est coulissant parallèlement à la direction longitudinale des palettes d'éjection (33, 34).

19. Epandeur centrifuge d'engrais selon l'une ou plusieurs des revendications précédentes,
**caractérisé en ce que**
les palettes d'éjection sont formées de deux parties coulissantes télescopiquement l'une par rapport à l'autre, la partie extérieure de la palette d'éjection couvrant l'orifice traversant en position engagée alors qu'elle libère cet orifice lorsqu'elle est en position étirée.

20. Epandeur centrifuge d'engrais selon l'une ou plusieurs des revendications précédentes,
**caractérisé par**
un tiroir (46) prévu au niveau de l'orifice traversant (45) pour couvrir au moins en partie l'orifice traversant (45) en étant monté coulissant sur la palette d'éjection (44).
